# EUROPEAN PATENT SPECIFICATION

(11) **EP 2 154 996 B1**
(45) Date of publication and mention of the grant of the patent: **08.12.2010**
(21) Application number: 08763110.7
(22) Date of filing: 26.05.2008
(51) Int. Cl.: A23L 1/236, A23L 2/60

(54) **NATURAL SWEETENER COMPOSITION**
NATÜRLICHE SÜSSSTOFFZUSAMMENSETZUNG
COMPOSITION D'ÉDULCORANT NATUREL

(30) Priority: 07.06.2007 EP 07109799
(43) Date of publication of application: 24.02.2010
(73) Proprietor: Firmenich S.A., 1211 Geneva 8 (CH)
(72) Inventor: GELIN, Jean-Luc, F-01220 Divonne-les-bains (FR); TASHIRO, Hidemi, CH-1206 Geneva (CH)
(74) Representative: Dale, Gavin Christopher
(86) International application number: PCT/IB2008/052066
(87) International publication number: WO 2008/149253

(56) References cited:
- JP-A- 58 116 674
- US-A- 5 433 965
- US-A- 6 103 240
- US-A1- 2006 134 294
- US-A1- 2007 082 106
- DATABASE WPI Week 200048 Thomson Scientific, London, GB; AN 2000-526778 XP002465692 & JP 2000 166506 A (NISSHIN OIL MILLS LTD) 20 June 2000 (2000-06-20)

## Description

### Technical Field

The present invention relates to a mixture of specific natural high intensity sweeteners and particularly relates to the very sweet extract from the juice of one or more plants in the Cucurbitaceae family together the intensively sweet protein isolated from the Katemfe fruit (Thaumatococcus *dainielli*)*.*

### Background and Prior Art

Sugar is a popular sweetening additive in human food preparation. By sugar is understood sucrose but also other commonly used calorie rich sweetening additives such as glucose, fructose and high fructose corn syrups. Popular feeding habits tend to show an over consumption of sugar even though it is well established that this is a known cause of various adverse effects on health, the most common including tooth decay and obesity.

For instance, the rapid introduction in the of high-fructose corn syrup into the food supply, particularly in non-alcoholic beverages, has also been shown to be an important factor contributing to the obesity.

Furthermore, in consumers with diabetes, the need to control the intake of sugar is especially pertinent since a high level of glucose in the blood can be harmful, particularly over an extended period.

For these reasons, as well as for other reasons identified below, a strong need exists for products which can, at least partially, replace sugar in foodstuffs. Ideally though, it would be desirable to be able to provide a product that could replace sugar entirely.

To date, various products have been proposed which seek to address these problems. For instance, artificial high intensity sweeteners have been developed which deliver a sweet taste at very low doses. Of the high intensity sweeteners already present on the market, Sucralose®, Aspartame, Potassium Acesulfame, cyclamate, saccharine can be named as well known alternatives. However, there is a strong desire by an ever-increasing number of consumers for natural or naturally derived products in preference to their artificial counterparts. Thus, it would be highly desirable to provide a product which meets this consumer need.

Certain naturally occurring sweeteners are, of course, already known. For instance, honey has been used for many centuries as a sweetening agent. However, an obvious drawback with honey is that its strong taste renders it unsuitable for use as a sugar-replacement product in many foodstuffs.

Within the class of naturally occurring sweetener, thaumatin is also particularly well-known. Thaumatin is a protein-based sweetener extracted from the katemfe fruit (*Thaumatococcus daniellii* Bennett) found commonly in West Africa. Whilst thaumatin provides the high intensity sweetness desirable in many foodstuffs and beverages, its taste profile is markedly different from that of sucrose.

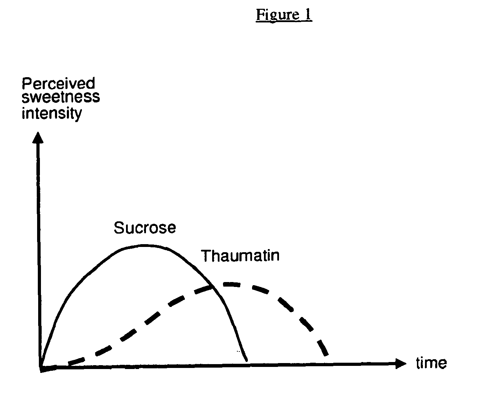

In particular, experience has shown that the sweetness of thaumatin builds very slowly when consumed with the perception lasting a long time (as shown in schematic figure 1), and often leaving a liquorice-like aftertaste at high usage levels. Sucrose, on the other hand, provides a strong flavour burst immediately upon consumption and has no undesirable aftertaste, even at high usage levels. Nevertheless, due to its extremely high sweetness intensity, allowing it to be used at very low dosages, and its status as a natural sweetner, its use is highly desirable.

It is known to use thaumatin in combination with other sweeteners. For instance, WO-A-01/06872 (Sara Lee) discloses a sweetener composition based on a combination of aspartame, acesulfame-K and thaumatin, comprising: 5 - 35 parts by weight of aspartame, 3 - 20 parts by weight of acesulfame-K, and 0.001 - 0.3 parts by weight of thaumatin. The thaumatin is said to be present to mask the somewhat bitter tastes of the artificial sweeteners, and does not address the issue of providing a natural sweetening composition having substantially the same taste profile as sugar.

US 5'433'965 (Fischer et al) discloses natural sweetening compositions comprising an extract of Luo Han Guo and sugar. Other high intensity sweeteners are proposed, including thaumatin, but there is no specific disclosure of the combination of these high intensity sweeteners.

It would therefore be desirable to provide a sweetening composition comprising thaumatin which substantially avoids the use of sugar, and particularly sucrose, but which provides the same taste intensity profile and cleanness of taste as sucrose.

It would be particularly preferable that the sweetening composition comprises substantially only naturally occurring sweeteners.

It is known that naturally occurring sweeteners often have additional off-notes, most notably herbal liquorice, or bitter off-notes.

It would therefore, also be desirable to provide a sweetening composition based substantially on natural sweeteners which both maximises sweetness whilst minimising off-notes.

Surprisingly, it has now been found that a composition of certain sweeteners when present at a certain ratio with respect to each other provides a sweetening composition that can be used to replace, at least partly, sugar and yet is capable of providing a very similar taste profile thereto.

Furthermore, such a composition has been found to have reduced levels of off-notes compared to traditional natural sweetening compositions.

### Summary of the Invention

Thus, according to the present invention, there is provided a sweetening composition comprising:
(a) the extract of the fruit of one or more plants from the Cucurbitaceae family comprising 20 wt% to 100 wt%, based on the total weight of the extract, of Mogroside V,
(b) the extract of the fruit of the Katemfe fruit, and
(c) optionally mono-ammonium glycyrrhizin
wherein the weight ratio of (a) to (b) is from 6000:1 to 1:40.

Such a composition has been found to improve both quantitatively and qualitatively the perceived sweetness whilst maintaining low levels of or even no off-notes and without requiring the use of artificial sweeteners.

The invention also provides a method of sweetening beverages and foodstuffs comprising the addition of the composition of the invention thereto.

The invention further provides the use of natural or naturally-derived sweetening composition of the invention to replace at least partly sugar in foodstuffs or beverages.

It has been found that optimised combinations of the extract of the fruit of one or more plants from the Cucurbitaceae family comprising 20 wt% to 80 wt%, based on the total weight of the extract, of mogroside V with the extract of the fruit of the Katemfe fruit, provide a time-intensity taste profile very close to the profile of sugar, especially sucrose.

This is particularly surprising since neither component (a) nor component (b) themselves provide a sugar-like taste intensity profile.

### Detailed Description of the Invention

The first component (referred to herein as "component (a)") of the composition is the extract of the fruit of one or more plants from the Cucurbitaceae family. The plants of certain members of the Cucurbitaceae family are known to produce intensely sweet fruits due to the presence of terpene glycosides, or mogrosides. Terpene glycosides are natural materials, which provide a sweetness often many times more powerful than that of natural sugar but with the added distinction of negligible calories. As plants in the Cucurbitaceae family, tribe Jollifieae, subtribe Thladianthinae, genus Siraitia can be named. Especially preferred are the genus/species S. grosvenorii, S. siamensis, S. silomaradjae, S. sikkimensis, S. africana, S. borneensis, and S. taiwaniana. The most preferred fruit is derived from the genus/species S. grosvenorii, which is often called Luo Han Guo fruit. Although the following description of the composition of this invention is described with particular reference to Luo Han Guo extract, it will be understood that the first component is not limited thereto.

Component (a) comprises from 20 to 100% by weight based on the total weight of component (a) of mogroside V. The structures of mogrosides are described in our application WO-A1-2008/129457. Mogroside V is the component shown to be most responsible for providing a clean, sweet taste in this extract and, in order to achieve the correct taste profile in the present invention, the level of Mogroside V should be at least 20%.

Component (a) can be obtained by any suitable method, many of which are well known to the person skilled in the art. For instance, a common method is given in US 5,411,755 in the section titled "Processing of the Fruit".

It can be obtained as a juice or a powdered extract. For instance, powdered instant Luo Han Guo is commercially available from suppliers such as Guilin Layn or the Yongfu Co., both of which are based in China. If it is then desirable to use it in liquid form, this is simply prepared by addition of a suitable solvent, typically a water/ethanol or water/propylene glycol mixture in a 5:1 to 15:1 ratio, followed by stirring until the powder has dissolved.

In order to obtain an especially desirable product for use as component (a), the extract can be filtered according to the process given in our copending application WO-A1-2008/129457. This provides a very clean tasting extract, which is high in mogroside content and less prone to generating off-tastes.

The second component (referred to herein as "component (b)") is the extract of the fruit of the Katemfe fruit, otherwise known as thaumatin. Thaumatin is a protein (E 957) and is commercially available under the name Talin^{®}. It can be provided in solid form, typically a powder, and with different levels of thaumatin loading. Commercially available powders include Pure Talin^{®} and MD90 Talin^{®}. Alternatively, it can be provided in liquid form, e.g. a liquid pre-dilutions, of which a commercially available examples is PG95 Talin^{®}.

The third component (referred to herein as "component (c)"), that is optionally and advantageously present, is mono-ammonium glycyrrhizinate, the ammoniated salt of glycyrrhizic acid. Glycyrrhizic acid is the sweet active compound isolated from liquorice, the root of some species of Glycyrrhiza belonging to the family of leguminosea. Mono-ammonium glycyrrhizinate is commercially available and can be obtained from, for instance, Antesite S.A., France.

In the sweetening composition, components (a) and (b) are present together in a weight ratio of 6000:1 to 1:40, more preferably 300:1 to 1:20, most preferably 50:1 to 1:1, e.g. 15:1 to 2:1. In these amounts, it has been surprisingly found that the overall taste profile is very similar to that of sucrose without detrimental off-note level.

By overall taste profile, it is meant both the sucrose-like character of perceived sweetness as well as the time-intensity profile. For reference, the schematic time-intensity profile of sucrose is shown in Figure 1.

Where the sweetening composition further comprises component (c), it is preferably present in an amount of from 0.3 to 50wt% based on the total combined weight of components (a), (b) and (c), more preferably from 2.5 to 30%, most preferably from 8 to 20%.

Component (c) is preferably present in a concentration range from 1 to 200 ppm, more preferably from 5 to 100 ppm, most preferably from 10 to 50 ppm in a foodstuff or beverage.

In a foodstuff or beverage, components (a) and (b) are most preferably present at respective concentration ranges from 5 to 300 ppm and from 0.05 to 20 ppm. More preferably components (a) and (b) are present at respective concentration ranges from 25 to 200 ppm and from 0.5 to 10 ppm, most preferably from 50 to 100 ppm and from 1 to 5 ppm.

The composition can be provided in any suitable form, such as liquids, preferably transparent liquids or solids, such as powders, granules, tablets and the like.

The sweetening composition of the present invention, especially when concentrated or dried, can be used to provide natural sweetness for many purposes. Examples of such uses to provide sweetness are in beverages, such as tea, coffee, fruit juice and fruit-flavoured beverages; foods, such as jams and jellies, peanut butter, pies, puddings, cereals, candies, ice creams, yogurts, bakery products; health care products, such as toothpastes, mouthwashes, cough drops, cough syrups; chewing gums; and sugar substitutes.

The invention will now be illustrated with reference to the following examples. All amounts are % by weight unless otherwise indicated.

### Examples

### Example 1

### Preparation of Sweetening Composition

Component (a) is Luo Han Guo Extract - Layn Natural Ingredients Corp., China (Batch MOG39-070301). It is a commercially available powder marketed as containing a minimum content of 30wt % Mogroside V).

Component (b) is PG95 Talin^{®} - Overseal Ingredient, UK (a commercially available liquid preparation containing 5wt% thaumatin in propylene glycol).

Component (c) is monoammonium glycyrrhizinate - Antesite S.A., France (a commercially available powder- having an indicated purity of 98%).

A liquid sweetening composition was prepared by mixing components (a), (b) and (c) in propylene glycol in warm conditions (40°C) and under moderate agitation using a magnetic follower.

The composition of liquid sweetening composition was 98.96 wt% propylene glycol, 0.65 wt% component (a), 0.24 wt% component (b) and 0.15wt% component (c).

In such a sweetening composition, concentrations in Mogroside V from components (a), (b) and (c) were found to be 0.195 wt%, 0.012 wt% and 0.147 wt% respectively.

A dry sweetening blend is also prepared by simple mixing of powdered extract of Luo Han Guo powdered thaumatin (Pure Talin^{®}, MD90 Talin^{®}) and powdered ammonium glycyrrhizinate.

### Example 2

### Sweetness Evaluation in Aqueous Solutions

The same ingredients as described in example 1 were used.

Component (a) was diluted to provide a 1 wt% solution in PG. Component (b) was diluted to provide a 2wt% in PG. Component (c) was diluted to provide a 1wt% in PG. In each case, dilution was performed at 40°C with moderate stirring using a magnetic stirrer until the products were entirely dissolved.

In samples I and 2, sucrose was dissolved in bottled water (ex Arkina, Switzerland) at room temperature to in the amounts shown in the table below. In samples 3 to 12, the dilutions of components (a), (b) and (c), prepared as described above, were added to bottled mineral water (Arkina, Switzerland) at room temperature in the amounts given in the following table.

All samples were kept at room temperature for 2 hours prior to evaluation.

**Table 1 : Composition of samples 1 to 12**

| | Sucrose | Component (a) | | Component (b) | | Component (c) | |
|---|---|---|---|---|---|---|---|
| Sample | wt% | wt% | ppm | wt% | ppm | wt% | ppm |
| 1 | 3.00 | - | - | - | - | - | - |
| 2 | 4.00 | - | - | - | - | - | - |
| 3 | - | 0.75 | 75 | - | - | - | - |
| 4 | - | 0.70 | 70 | 0.15 | 1.5 | - | - |
| 5 | - | 0.65 | 65 | 0.125 | 1.25 | 0.25 | 25 |
| 6 | - | 0.60 | 60 | 0.10 | 1 | 0.50 | 50 |
| 7 | - | 0.55 | 55 | - | - | 0.75 | 75 |
| 8 | - | 1.00 | 100 | - | - | - | - |
| 9 | - | 0.95 | 95 | 0.10 | 1 | - | - |
| 10 | - | 0.90 | 90 | 0.075 | 0.75 | 0.125 | 12.5 |
| 11 | - | 0.85 | 85 | 0.05 | 0.5 | 0.25 | 25 |
| 12 | - | 0.80 | 80 | - | - | 0.50 | 50 |

Evaluation was performed by a trained panel of 3 flavour experts. The panellists were asked to rate samples 1 to 12 relative to eachother for sweetness intensity, sweetness profile and off-notes.

It was found that samples 3 and 8 provided good sweetness profile with little detectable off-notes. Samples 4 and 9 were judged to have better sweetness intensity and profiles than samples 3 and 8. Excellent results were achieved with sample 10, which was found to have a very clean profile without detrimental off-notes.

Furthermore, samples 4, 5 and 9 were found to have very similar perceived sweetness to sample 1.

Samples 7 and 12 were found to be very low in sweetness with strong flavour distortion, particularly liquorice off-notes.

### Example 3

### Reduced Sugar Tea Beverage

Dilutions of components (a), (b) and (c) were prepared having as described in example 2. Two tea beverage bases (A and B) were prepared with the ingredients and amounts shown in Table 2 below.

**Table 2 : Preparation of beverage bases A (sugar reduced) and B (high sugar)**

| Ingredient | Base A (g) | Base B (g) |
|---|---|---|
| Sugar(1) | 43.036 | 69.255 |
| Citric acid (1) | 1.070 | 1.720 |
| Black tea extract (2) | 1.200 | 1.200 |
| Trisodium citrate (1) | 0.500 | 0.500 |
| Ascorbic acid (1) | 0.200 | 0.200 |
| Water (3) | 970.753 | 953.945 |
| Lemon Flavour 505882 SE (2) | 0.500 | 0.500 |
| Total (g) | 1.017.259 | 1027.320 |

| | | |
|---|---|---|
| (1) crystalline (2) ex Firmenich, Switzerland (3) Arkina, Switzerland | | |

The bases were prepared as follows:
Sugar and tea extract were dispersed into the water at room temperature during 15 minutes using an IKA stirrer at moderate speed. The trisodium citrate, citric acid and ascorbic acid were then dispersed and solubilized into the mixture, again at room temperature during 15 minutes using an IKA stirrer at moderate speed. Following this, the Lemon Flavour was added and mixed into the base with stirring.

Base A was split in 250g fractions, each of which was then transferred into separate glass containers. The various sweetening components were added into base A in the amounts shown in table 3 below.

The containers were sealed and then subjected to a pasteurization process performed in a water water-bath at 70°C for 1 minute. Next, the containers were held at room temperature for 15 minutes (pre-cooling) and then stored at 5°C prior to evaluation.

**Table 3 : Sweetening components added to sugar-reduced base A**

| | Base (A or B) | Component (a) | | Component (b) | | Component (c) | |
|---|---|---|---|---|---|---|---|
| Sample | | wt% | ppm | wt% | ppm | wt% | ppm |
| 13 | B | - | - | - | - | - | - |
| 14 | A | - | - | - | - | - | - |
| 15 | A | 0.75 | 75 | 0.1 | 1 | 0.1 | 10 |
| 16 | A | 0.65 | 65 | 0.12 | 1.2 | 0.15 | 15 |
| 17 | A | 0.60 | 55 | 0.14 | 1.4 | 0.20 | 20 |

Evaluation was performed by a trained panel of 6 experts in flavour and flavour application. The panellists were each asked to rate samples 1 to 12 relative to each other for sweetness intensity, sweetness profile and off-notes.

The panellists found sample 16 was the best in terms of perceived sweetness intensity and sugar-like profile, having a perceived sweetness level and profile very close to the high-sugar control (sample 13).

## Claims

1. A sweetening composition comprising:
(a) the extract of the fruit of one or more plants from the Cucurbitaceae family comprising 20 wt% to 100 wt%, based on the total weight of the extract, of Mogroside V,
(b) the extract of the fruit of the Katemfe fruit, and
(c) optionally mono-ammonium glycyrrhizin
wherein the weight ratio of (a) to (b) is from 6000:1 to 1:40.

2. A sweetening composition as claimed in claim 1 wherein component (a) is an extract of the Luo Han Guo fruit having a Mogroside V content of 30 wt% to 80 wt%, based on the total weight of component (a).

3. A foodstuff or beverage comprising the sweetening composition according to either claim 1 or claim 2 wherein the concentration ranges in the beverage or foodstuff of (a) and (b) are 5 to 300 ppm and 0.05 to 20 ppm respectively.

4. A foodstuff or beverage as claimed in claim 3 wherein concentration ranges for components (a) and (b) are from 25 to 200 ppm and from 0.5 to 10 ppm respectively.

5. A foodstuff or beverage as claimed in claim 4 wherein concentration ranges for components (a) and (b) are from 50 to 100 ppm and from 1 to 5 ppm respectively.

6. A foodstuff or beverage as claimed in any one of claims 3 to 5 wherein component (c) is present at a concentration range from 1 to 200 ppm.

7. The use of a sweetening composition as claimed in either claim 1 or claim 2 as a sugar replacement composition.

## Patentansprüche

1. Süßungsmittelzusammensetzung, umfassend:
(a) den Extrakt der Frucht von einer oder mehreren Pflanzen aus der Cucurbitaceae-Familie, umfassend 20 Gew.-% bis 100 Gew.-%, bezogen auf das Gesamtgewicht des Extrakts, von Mogrosid V,
(b) den Extrakt der Frucht der Katemfe-Frucht, und
(c) wahlweise Monoammoniumglycyrhizin,
wobei das Gewichtsverhältnis von (a) zu (b) von 6000:1 bis 1:40 beträgt.

2. Süßungsmittelzusammensetzung nach Anspruch 1, wobei Komponente (a) ein Extrakt der Luo-Han-Guo-Frucht mit einem Mogrosid-V-Gehalt von 30 Gew.-% bis 80 Gew.-%, bezogen auf das Gesamtgewicht von Komponente (a), ist.

3. Nahrungsmittel oder Getränk, umfassend die Süßungsmittelzusammensetzung gemäß entweder Anspruch 1 oder Anspruch 2, wobei die Konzentrationsbereiche in dem Getränk oder Nahrungsmittel von (a) und (b) 5 bis 300 ppm bzw. 0,05 bis 20 ppm sind.

4. Nahrungsmittel oder Getränk nach Anspruch 3, wobei Konzentrationsbereiche für die Komponenten (a) und (b) von 25 bis 200 ppm bzw. von 0,5 bis 10 ppm sind.

5. Nahrungsmittel oder Getränk nach Anspruch 4, wobei Konzentrationsbereiche für die Komponenten (a) und (b) von 50 bis 100 ppm bzw. von 1 bis 5 ppm sind.

6. Nahrungsmittel oder Getränk nach einem der Ansprüche 3 bis 5, wobei Komponente (c) in einem Konzentrationsbereich von 1 bis 200 ppm vorhanden ist.

7. Verwendung einer Süßungsmittelzusammensetzung nach entweder Anspruch 1 oder Anspruch 2 als Zuckerersatzzusammensetzung.

## Revendications

1. Composition édulcorante comprenant:
(a) l'extrait du fruit d'une ou de plusieurs plantes de la famille des Cucurbitacées comprenant de 20% en poids à 100% en poids, rapporté au poids total de l'extrait, de Mogroside V,
(b) l'extrait du fruit du Katemfe, et
(c) optionnellement, du mono ammonium de glycyrrhizine,
dans laquelle le rapport pondéral de (a) à (b) est compris entre 6000:1 et 1:40.

2. Composition édulcorante selon la revendication 1 dans laquelle le composant (a) est un extrait du fruit du Luo Han Guo ayant une teneur en Mogroside V de 30% en poids à 80% en poids, rapporté au poids total du composant (a).

3. Aliment ou boisson comprenant la composition édulcorante selon la revendication 1 ou la revendication 2 dans lequel les gammes de concentration, dans la boisson ou l'aliment, de (a) et de (b) vont respectivement de 5 à 300 ppm et de 0,05 à 20 ppm.

4. Aliment ou boisson selon la revendication 3 dans lequel les gammes de concentration pour les composants (a) et (b) vont respectivement de 25 à 200 ppm et de 0,5 à 10 ppm.

5. Aliment ou boisson selon la revendication 4 dans lequel les gammes de concentration pour les composants (a) et (b) vont respectivement de 50 à 100 ppm et de 1 à 5 ppm.

6. Aliment ou boisson selon l'une quelconque des revendications 3 à 5 dans lequel le composant (c) est présent dans une gamme de concentration de 1 à 200 ppm.

7. Utilisation d'une composition édulcorante selon la revendication 1 ou la revendication 2 en tant que composition de remplacement du sucre.
